# EUROPÄISCHE PATENTSCHRIFT

(11) **EP 1 862 705 B1**
(45) Veröffentlichungstag und Bekanntmachung des Hinweises auf die Patenterteilung: **18.03.2009**
(21) Anmeldenummer: 07010236.3
(22) Anmeldetag: 23.05.2007
(51) Int. Cl.: F16H 25/20, B66F 3/44

(54) **Stelleinrichtung zum Positionieren einer Last**
Controlling equipment for positioning a load
Dispositif de réglage destiné à positionner une charge

(30) Priorität: 30.05.2006 AT 9272006
(43) Veröffentlichungstag der Anmeldung: 05.12.2007
(73) Patentinhaber: Zimmermann, Jürgen, 6900 Bregenz (AT)
(72) Erfinder: Zimmermann, Jürgen, 6900 Bregenz (AT)
(74) Vertreter: Hofmann, Ralf U.

(56) Entgegenhaltungen:
- AT-U1- 8 083
- US-A- 3 142 998

## Beschreibung

Die Erfindung betrifft eine Stelleinrichtung zum Positionieren einer Last, umfassend
ein Spindelhubgetriebe mit einer Spindel, einer auf der Spindel angeordneten Spindelmutter und einem an gegenüberliegenden Seitenflächen erste und zweite Lagerbuchsen aufweisenden Getriebegehäuse, in welchem die Spindel oder die Spindelmutter und eine Antriebswelle zum Antrieb der Spindel bzw. der Spindelmutter drehbar gelagert sind,
erste und zweite Lagerböcke jeweils mit einem Standfuß und einem von diesem abstehenden Arm, der in einem an sein freies Ende anschließenden Endabschnitt einen Lagerzapfen aufweist, welcher zur schwenkbaren Lagerung des Getriebegehäuses des Spindelhubgetriebes in eine jeweilige Lagerbuchse des Getriebegehäuses eingreift,
einen Antriebsmotor mit einer Motorwelle und
eine Motorflanscheinheit mit einem Flanschgehäuse, welches einerseits mit dem Antriebsmotor, andererseits mit dem Getriebegehäuse starr verbunden ist und eine im Flanschgehäuse angeordnete Kupplung zur Drehmomentübertragung von der Motorwelle auf die Antriebswelle des Spindelhubgetriebes aufweist.

Stelleinrichtungen zum Positionieren einer Last, welche Spindelhubgetriebe, die auch als Spindelmuttergetriebe bezeichnet werden, aufweisen, sind in unterschiedlichen Ausführungsformen bekannt. Solche Stelleinrichtungen dienen zur Positionierung von Lasten in Form von Bauteilen oder Baugruppen. Beispielsweise kommen diese Stelleinrichtungen bei Hubtischen, Hebeböcken, höhenverstellbaren Bühnen, Ventilen mit motorisch verstellbaren Ventilschiebern, motorisch verstellbaren Betonschalungen usw. zum Einsatz.

Neben Spindelhubgetrieben, bei denen die Spindelmutter drehbar und achsial unverschiebbar in einem Getriebegehäuse gelagert ist und bei ihrer Drehung eine gegen Verdrehung gesicherte Spindel in achsialer Richtung verstellt, sind auch Spindelhubgetriebe bekannt, bei welchen die Spindel drehbar und achsial unverschiebbar im Getriebegehäuse gelagert ist und durch Drehung der Spindel eine auf ihrem Außengewinde angeordnete und gegen Verdrehung gesicherte Spindelmutter in achsialer Richtung der Spindel verstellt wird.

Der Antrieb der Spindelmutter bzw. der Spindel erfolgt mittels eines Antriebsmotors, dessen Motorwelle mit einer aus dem Getriebegehäuse des Spindelhubgetriebes herausstehenden Antriebswelle gekuppelt ist. Um eine einfache Verbindung des Antriebsmotors und des Spindelhubgetriebes zu ermöglichen, sind bereits Motorflanscheinheiten bekanntgeworden. Diese umfassen ein Flanschgehäuse und eine im Flanschgehäuse angeordnete Kupplung. Das Flanschgehäuse wird einerseits am Getriebegehäuse des Spindelhubgetriebes, andererseits am Gehäuse des Antriebsmotors befestigt, wodurch insgesamt eine Halterung des Antriebsmotors am Getriebegehäuse erreicht wird und somit eine separate Lagerung des Antriebsmotors entfallen kann. Bei der Verbindung des Flanschgehäuses mit dem Getriebegehäuse und dem Motorgehäuse wird gleichzeitig eine Verbindung der Antriebswelle des Spindelhubgetriebes sowie der Motorwelle des Antriebsmotors mit der Kupplung der Motorflanscheinheit hergestellt, wodurch die drehmomentübertragende Verbindung zwischen der Motorwelle und der Antriebswelle ausgebildet wird.

Bei Anwendungen, bei welchen von der Stelleinrichtung eine Schwenkbetätigung einer Last um eine Schwenkachse erfolgt, kommt es bei der Verschwenkung der Last auch um eine (i.a. kleinere) Verschwenkung des Getriebegehäuses des Spindelhubgetriebes um eine Schwenkachse. Um für solche Anwendungen eine verschwenkbare Lagerung des Getriebegehäuses zu ermöglichen, werden üblicherweise Adapterstücke bereitgestellt, an welche das Getriebegehäuse angeschraubt werden kann und welche Lagerbuchsen oder Lagerzapfen aufweisen. Mit diesen Lagerbuchsen oder Lagerzapfen der Adapterstücke wirken Lagerzapfen bzw. Lagerbuchsen von Lagerböcken zusammen, die an einem ortsfesten Tragteil angebracht sind, beispielsweise an einem Maschinentisch, gegenüber welchem die Last um eine Schwenkachse zu verschwenken ist. Die Last ist weiters verschwenkbar mit der Spindel (im Fall einer achsial verstellbaren Spindel) bzw. der Spindelmutter (im Fall einer achsial verstellbaren Spindelmutter) verbunden. Auch eine verschwenkbare Lagerung der mit dem Getriebegehäuse verbundenen Adapterstücke an der verschwenkbaren Last und eine verschwenkbare Lagerung der achsial verstellbaren Spindel bzw. achsial verstellbaren Spindelmutter an einem ortsfesten Tragteil, beispielsweise Maschinentisch, kann vorgesehen sein. Die zusätzlichen Adapterstücke führen zu einem zusätzlichen Herstellungs- und Montageaufwand.

Bekannt ist weiters eine Stelleinrichtung der eingangs genannten Art. Das Spindelhubgetriebe und die Lagerböcke dieser Einrichtung sind in der AT 008 083 U1 gezeigt und beschrieben. Die Lagerbuchsen zur schwenkbaren Lagerung des Spindelhubgetriebes sind bei dieser Einrichtung direkt im Getriebegehäuse angeordnet, wobei an gegenüberliegenden Seitenflächen des Getriebegehäuses Sacklöcher ausgebildet sind, in die Gleitbuchsen eingesetzt sind. In diese Lagerbuchsen ragen zur Schwenklagerung des Getriebegehäuses die Lagerzapfen von Lagerböcken. Die Lagerzapfen sind an von Standfüßen abstehenden Armen angeordnet, welche in der Form eines umgekehrten V ausgebildet sind.

Aus Platzgründen (da eine kompakte Ausbildung des Getriebegehäuses des Spindelhubgetriebes gewünscht ist) sind bei dieser vorbekannten Stelleinrichtung der eingangs genannten Art die Lagerbuchsen und die Antriebswelle an zueinander rechtwinklig stehenden Seitenflächen des Getriebegehäuses angeordnet, d.h. die Schwenkachse und die Achse der Antriebswelle stehen rechtwinklig zueinander. Wenn nun der Antriebsmotor über eine Motorflanscheinheit am Getriebegehäuse angebracht ist, so kann das Gewicht des Antriebsmotors je nach Lage des Getriebegehäuses zu einem unerwünscht hohen Drehmoment um die Schwenkachse des Getriebegehäuses führen.
Aufgabe der Erfindung ist es, eine verbesserte Stelleinrichtung der eingangs genannten Art bereitzustellen, bei der bei allen räumlichen Orientierungen des Getriebegehäuses vom über die Motorflanscheinheit mit dem Getriebegehäuse verbundenen Antriebsmotor nur ein relativ geringes Drehmoment ausgeübt wird, welches um die Achse der Antriebswelle bzw. Motorwelle wirkt. Erfindungsgemäß gelingt dies durch eine Stelleinrichtung mit den Merkmalen des Anspruchs 1.

Durch die erfindungsgemäße Ausbildung kann auch bei einer kompakten Ausbildung des Getriebegehäuses die Motorflanscheinheit an einer der beiden Seitenflächen des Getriebegehäuses angebracht werden, an denen sich die Lagerbuchsen befinden, wobei eine stabile Ausbildung des Flanschgehäuses der Motorflanscheinheit und somit eine stabile Verbindung des Antriebsmotors mit dem Getriebegehäuse erreicht werden kann.

Vorzugsweise weist zumindest der Arm desjenigen Lagerbocks, der benachbart zum Flanschgehäuse angeordnet ist, auf der dem Flanschgehäuse zugewandten Seite in einem an seinen oberen Endabschnitt anschließenden mittleren Abschnitt eine Einbuchtung auf, in die in einem Teilbereich des Schwenkbereichs des Getriebegehäuses ein Teil des Flanschgehäuses ragt. Der mögliche Schwenkbereich des Getriebegehäuses kann auf diese Weise vergrößert werden. Insbesondere ragt in derjenigen Schwenkstellung des Getriebegehäuses, in welcher die Spindel des Spindelhubgetriebes rechtwinklig zu einer Standebene der Standfüße der Lagerböcke ausgerichtet ist, ein Teil des Flanschgehäuses in die Ausnehmung des Arms des Lagerbocks.

In einer vorteilhaften Ausführungsform der Erfindung weist das Flanschgehäuse auch auf der von der Schwenkachse des Getriebegehäuses abgewandten Seite eine Einbuchtung auf. Durch eine solche "taillierte" Ausbildung des Flanschgehäuses kann das gleiche Flanschgehäuse wahlweise an beiden Seitenflächen des Getriebegehäuses, an denen die Lagerbuchsen angeordnet sind, angebracht werden. Es müssen somit für unterschiedliche Anwendungen nicht unterschiedliche Motorflanscheinheiten bereitgestellt werden. Das Flanschgehäuse kann hierbei eine statisch sehr stabile Ausbildung aufweisen.

Weitere Vorteile und Einzelheiten der Erfindung werden im Folgenden anhand der beiliegenden Zeichnung erläutert. In dieser zeigen:

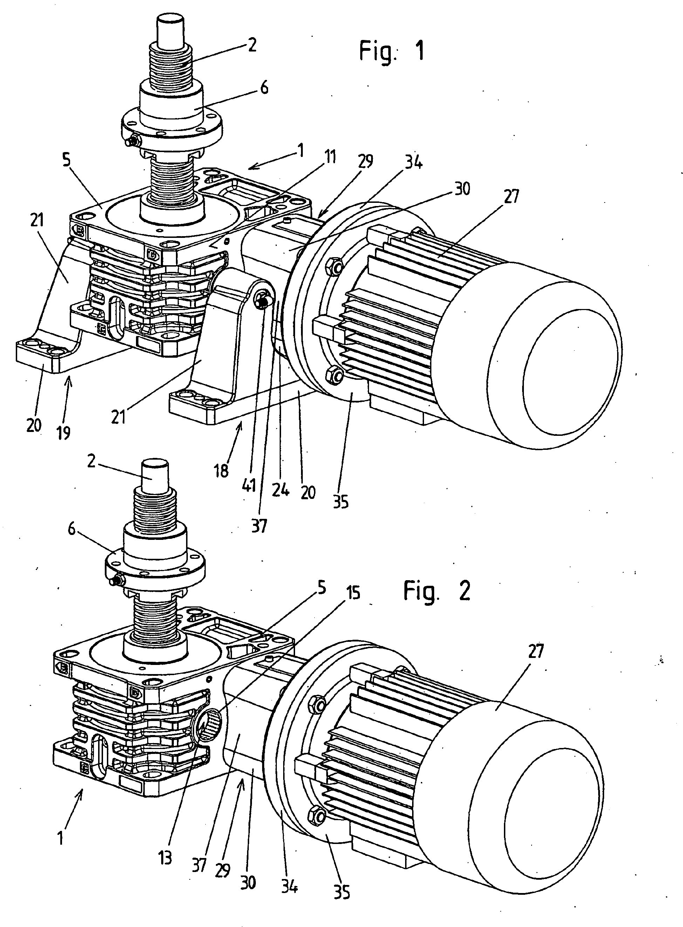

- Fig. 1: eine Schrägsicht einer erfindungsgemäßen Stelleinrichtung;
- Fig. 2: eine Fig. 1 entsprechende Schrägsicht ohne die Lagerböcke;
- Fig. 3: eine Schrägsicht nur des Spindelhubgetriebes (die Stelleinrichtung ohne die Lagerböcke, den Antriebsmotor und die Motorflanscheinheit);
- Fig. 4: einen parallel zur Längsachse und durch die Längsachse verlaufenden Schnitt durch das Spindelhubgetriebe (rechtwinklig zur durch die Lagerbuchsen definierten Schwenkachse);
- Fig. 5: einen Schnitt entlang der Linie A-A von Fig. 6, wobei zusätzlich ein stationäres Tragteil zur Montage der Stelleinrichtung und eine zu bewegende Last mit strichlierten Linien schematisch angedeutet sind;
- Fig. 6: eine Seitenansicht der Stelleinrichtung in der gleichen Schwenkstellung wie in Fig. 5, das Getriebegehäuse teilweise im Schnitt, Blickrichtung B in Fig. 5;
- Fig. 7 und Fig. 8: Darstellungen entsprechend Fig. 5 (ohne stationäres Tragteil und Last) und Fig. 6 in einer anderen Schwenkstellung des Getriebegehäuses;
- Fig. 9: und Fig. 10 Darstellungen entsprechend Fig. 5 und Fig. 6 in einer weiteren Schwenkstellung des Getriebegehäuses;
- Fig. 11: einen Schnitt entlang der Linie C-C von Fig. 6.

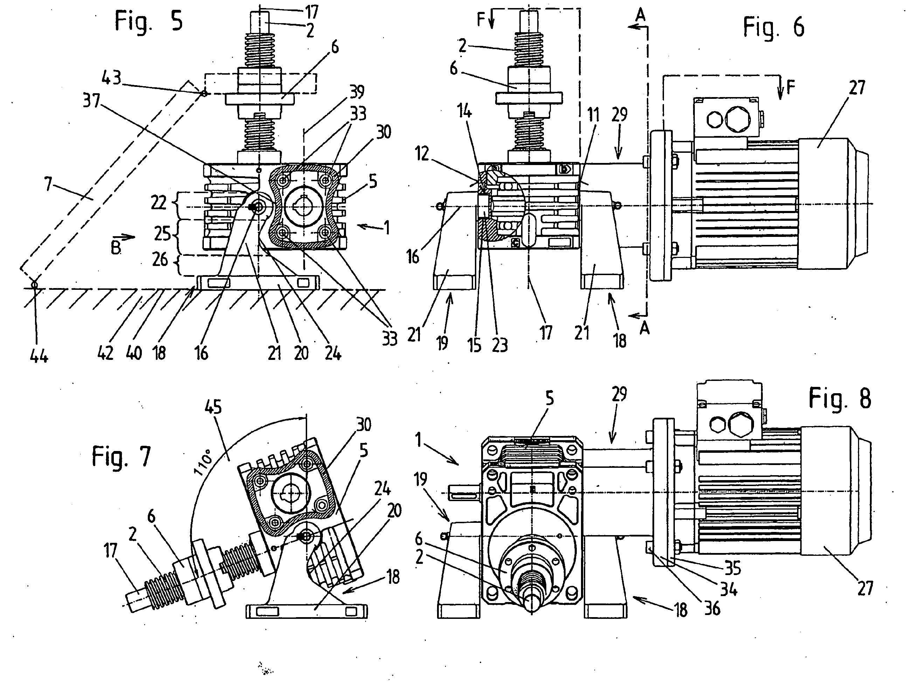

Beim in den Figuren dargestellten Ausführungsbeispiel weist das Spindelhubgetriebe 1 eine Spindel 2 auf, die über Achsiallager 3, 4 drehbar und achsial unverschiebbar im Getriebegehäuse 5 gelagert ist. Auf dem Außengewinde der Spindel 2 ist eine Spindelmutter 6 angeordnet, die durch ihre Verbindung mit der zu verstellenden Last 7 (vgl. Fig. 5) gegen eine Verdrehung gesichert ist. Durch Drehung der Spindel 2 wird die Spindelmutter 6 in achsialer Richtung der Spindel 2 verstellt.

Zur Drehung der Spindel 2 ist innerhalb des Getriebegehäuses 5 ein Antriebsrad 8 drehbar gelagert, dessen Außenverzahnung mit der Außenverzahnung eines starr mit der Spindel 2 verbundenen Zahnrads 9 in Eingriff steht. Die Außenverzahnung des Zahnrads 9 kann beispielsweise als Schneckenverzahnung und das Antriebsrad 8 als Schnecke ausgebildet sein. Das Antriebsrad 8 wird über eine Antriebswelle 10 angetrieben, welche im gezeigten Ausführungsbeispiel an gegenüberliegenden Seitenflächen 11, 12 des Getriebegehäuses 5 aus diesem heraustritt und über dieses vorsteht. Die drehbare Lagerung des Antriebsrads 8 kann beispielsweise durch eine drehbare Lagerung der Antriebswelle 10 über beidseitig des Antriebsrads 8 angeordnete Radiallager erfolgen.

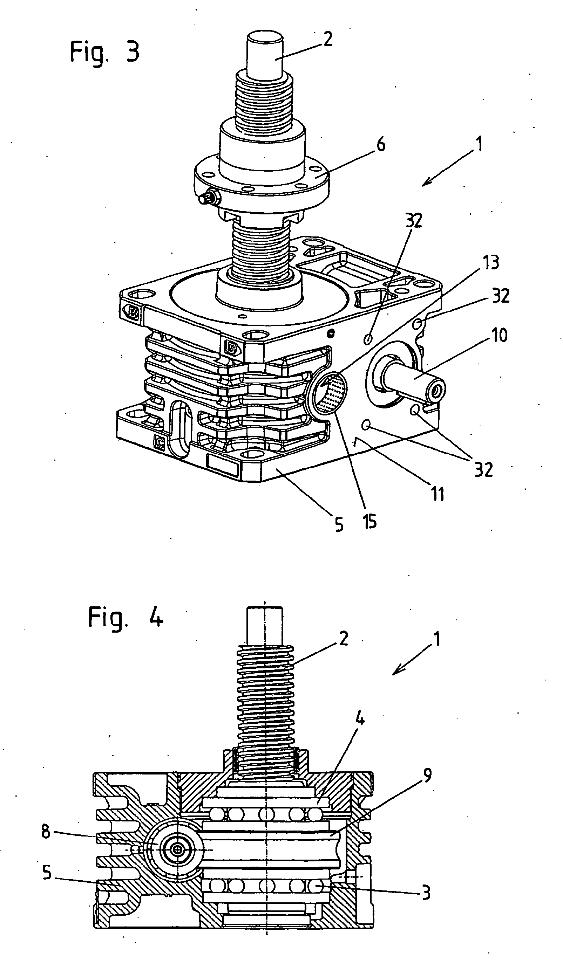

An den Seitenflächen 11, 12 des Getriebegehäuses 5 sind weiters Lagerbuchsen 13, 14 angeordnet (vgl. Fig. 3 und Fig. 6). Diese werden durch im Getriebegehäuse 5 angeordnete Sacklöcher gebildet, in welche Gleitbuchsen 15 eingesetzt sind.

Die Lagerbuchsen 13, 14 liegen somit an den gleichen Seitenflächen 11, 12, an denen die Antriebswelle 10 aus dem Getriebegehäuse 5 heraussteht. Hierbei sind die Lagerbuchsen 13, 14 gegenüber den herausstehenden Enden der Antriebswelle 10 seitlich versetzt, d.h. von diesen beabstandet. Die durch die Lagerbuchsen 13, 14 vorgegebene Schwenkachse 16 steht rechtwinklig zur Längsachse 17 der Spindel 2. Vorzugsweise schneidet die Schwenkachse 16 die Längsachse 17 der Spindel 2, wie dies aus den Figuren sichtbar ist.

Die Antriebswelle 10 bzw. ihre Längsachse ist parallel zur Schwenkachse 16 ausgerichtet.

Zur schwenkbaren Lagerung des Spindelhubgetriebes 1 um die Schwenkachse 16 sind Lagerböcke 18, 19 vorhanden. Diese weisen jeweils einen Standfuß 20 und einen von diesem abstehenden Arm 21 auf. In einem Endabschnitt 22 (vgl. Fig. 5), der an das vom Standfuß 20 entfernte freie Ende des jeweiligen Arms 21 anschließt, weist der Arm 21 einen Lagerzapfen 23 (vgl. Fig. 6) auf. Im montierten Zustand der Stelleinrichtung greifen die Lagerzapfen 23 der Arme 21 der Lagerböcke 18, 19 in die Lagerbuchsen 13, 14 ein, um das Getriebegehäuse 5 und somit das Spindelhubgetriebe 1 insgesamt um die Schwenkachse 16 verschwenkbar zu lagern.

Die Lagerzapfen 23 sind vorzugsweise einstückig mit dem Arm 21 des Standfußes 20 ausgebildet. Dadurch kann die Ausdehnung des Endabschnitts 22 rechtwinklig zur Schwenkachse 16 gering gehalten werden.

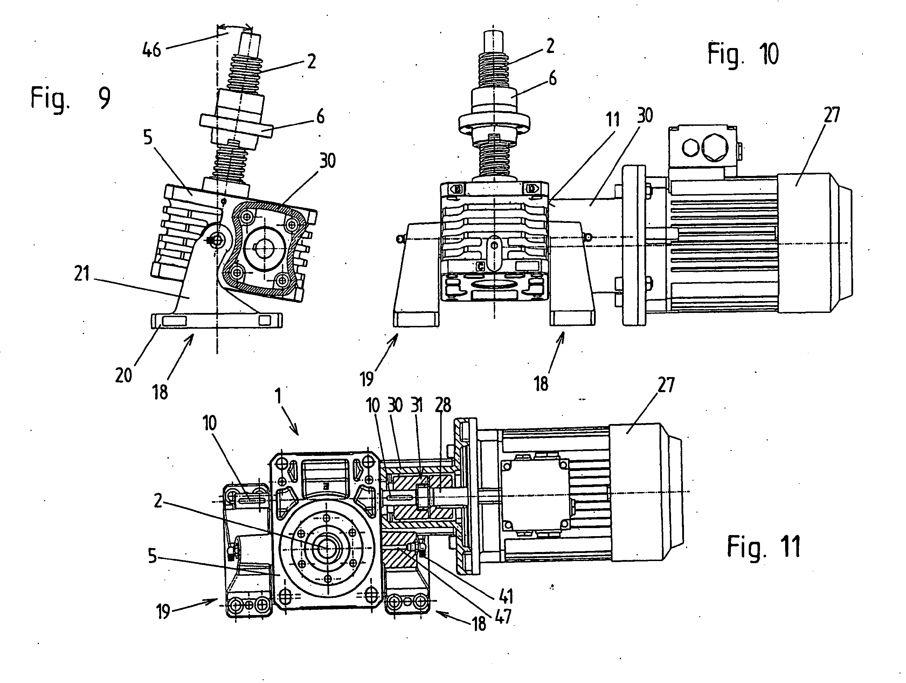

Zur Schmierung sind an den Armen 21 angebrachte Schmiermittel 41 vorhanden, an denen Bohrungen 47 (vgl. Fig. 11) ausgehen, die durch die Arme 21 und Lagerzapfen 23 bis zu deren Stirnseiten verlaufen.

Auf der im Montagezustand der Antriebswelle 10 zugewandten Seite weisen die Arme 21 in einem mittleren Abschnitt 25, der zwischen dem Endabschnitt 22 und einem dem Standfuß 20 benachbarten Fußabschnitt 26 des Armes 21 liegt, eine Einbuchtung 24 auf, d.h. sie sind in diesem Bereich konkav (von der weiter unten beschriebenen Motorflanscheinheit 29 aus gesehen) ausgebildet.

Zum Antrieb der Stelleinrichtung dient ein Antriebsmotor 27, der eine Motorwelle 28 aufweist.

Zur Befestigung des Antriebsmotors 27 am Getriebegehäuse 5 und zur Übertragung einer Drehbewegung der Motorwelle 28 auf die Antriebswelle 10 dient eine Motorflanscheinheit 29. Diese weist innerhalb eines Flanschgehäuses 30 eine Kupplung 31 auf.

Zur Befestigung des Flanschgehäuses 30 an einer der Seitenflächen 11, 12 des Getriebegehäuses 5 sind an diesen Seitenflächen 11, 12 im Bereich um die herausragenden Enden der Antriebswelle 10 Gewindebohrungen 32 angeordnet (vgl. Fig. 3). Das Flanschgehäuse 30 weist korrespondierende Bohrlöcher auf, durch welche in die Gewindebohrungen 32 eingeschraubte Befestigungsschrauben 33 ragen (vgl. Fig. 5). Zur Befestigung des Antriebsmotors 27 an der andern Seite des Flanschgehäuses 30 besitzen das Flanschgehäuse 30 und der Antriebsmotor 27 Ringflansche 34, 35 mit korrespondierenden Bohrlöchern, um den Antriebsmotor 27 mittels Schrauben 36 und auf diese aufgeschraubte Muttern am Flanschgehäuse 30 zu befestigen (vgl. Fig. 8).

Bei der Verbindung des Flanschgehäuses 30 mit dem Getriebegehäuse 5 und dem Antriebsmotor 27 werden die Antriebswelle 10 und die Motorwelle 28 mit der Kupplung 31 gekuppelt, um die Antriebswelle 10 mit der Motorwelle 28 drehfest zu verbinden. Die Kupplung 31 weist hierzu Einstecköffnungen zur drehfesten Verbindung einerseits mit der Antriebswelle 10, andererseits mit der Motorwelle 28 auf.

Das Flanschgehäuse 30 ist zumindest auf der der Schwenkachse 16 zugewandten Seite mit einer Einbuchtung 37 versehen, d.h. es weist von der Schwenkachse 16 aus gesehen einen konkav ausgebildeten Bereich auf. Im montierten Zustand der Stelleinrichtung ragt in diese Einbuchtung 37 ein dem Flanschgehäuse 30 zugewandter Teil des Endabschnitts 22 des Arms 21 des benachbarten Lagerbocks 18, wie dies insbesondere aus den Fig. 5, 7 und 9 ersichtlich ist.

Vorzugsweise weist das Flanschgehäuse 30 auch auf der gegenüberliegenden, d.h. von der Schwenkachse 16 abgewandten Seite eine Einbuchtung 38 auf, d.h. weist auf dieser Seite einen konkaven Bereich auf. Die gleiche Motorflanscheinheit 29 ist somit wahlweise an einer der beiden Seitenflächen 11, 12 des Getriebegehäuses 5 einsetzbar. Im gezeigten Ausführungsbeispiel ist das Flanschgehäuse 30 bezüglich einer Mittelebene 39 (Fig. 5), die im Montagezustand senkrecht zur von der Antriebswelle 10 und der Schwenkachse 16 aufgespannten Ebene steht, spiegelsymmetrisch ausgebildet.

Die Einbuchtung 37 liegt im Bereich der Schnittlinie der von der Antriebswelle 10 und der Schwenkachse 16 aufgespannten Ebene mit dem Flanschgehäuse 30. Das Gleiche gilt für die vorzugsweise vorhandene Einbuchtung 38 an der andern Seite des Flanschgehäuses 30.

Der Schwenkbereich des Spindelhubgetriebes 1 ist in den Fig. 5 bis 10 dargestellt. In den Fig. 5 und 6 ist die Schwenkstellung des Getriebegehäuses 5 dargestellt, in welcher die Spindel 2 bzw. ihre Längsachse 17 rechtwinklig zu einer Standebene 40 der Standfüße 20 der Lagerböcke 18, 19 ausgerichtet ist. In dieser Schwenkstellung ragt ein Teil des Flanschgehäuses 30 in die Einbuchtung 24 des Armes 21 des benachbarten Lagerbocks 18. Dieser Teil des Flanschgehäuses 30 liegt im Bereich des dem Standfuß 20 zugewandten Endes der dem benachbarten Lagerbock 18 zugewandten Seite des Flanschgehäuses 30.

Ausgehend von dieser in den Fig. 5 und 6 dargestellten Schwenkstellung des Spindelhubgetriebes 1 ist das Spindelhubgetriebe 1 vorzugsweise um mindestens 90° in eine Richtung verschwenkbar, in der das Flanschgehäuse 30 aus der Einbuchtung 24 des Arms 21 herausgeführt wird. Besonders bevorzugt ist es, wenn dieser Winkel 45 mindestens 100° beträgt. Im gezeigten Ausführungsbeispiel beträgt dieser Winkel 45 mehr als 110° (vgl. Fig. 7 und 8).

Ausgehend von der in den Fig. 5 und 6 dargestellten Schwenkstellung ist das Getriebegehäuse vorzugsweise um mindestens 5° in die Richtung verschwenkbar, in welcher das Flanschgehäuse 30 zunehmend in die Einbuchtung 24 des Arms 21 eingreift. Besonders bevorzugt ist es, wenn dieser Winkel 46 wie im gezeigten Ausführungsbeispiel mehr als 10° beträgt (vgl. Fig. 9 und 10).

Ein Beispiel für die Verstellung einer Last 41 mittels einer erfindungsgemäßen Stelleinrichtung ist in Fig. 5 nur schematisch mit strichlierten Linien angedeutet. Die Standfüße 20 der Lagerböcke 18, 19 sind an einem stationären Tragteil 42, beispielsweise einem Maschinentisch festgelegt. Die zu verstellende Last 7 ist mit der Spindelmutter 6 um eine Achse 43 und mit dem Tragteil 42 um eine Achse 44 verschwenkbar verbunden. Bei der Verschwenkung der Last 7 gegenüber dem Tragteil 42 um die Achse 44 durch achsiale Verstellung der Spindelmutter 6 auf der Spindel 2 kommt es auch zu einer Verschwenkung des Getriebegehäuses 5 um die Schwenkachse 16. Denkbar und möglich wäre auch die Befestigung der zu verstellenden Last 7 an den Lagerböcken 18, 19 und der Spindelmutter 6 am stationären Tragteil 42.

Im gezeigten Ausführungsbeispiel sind beide Arme 21 der Lagerböcke 18, 19 mit Einbuchtungen 24 versehen, um die Anbringung des Flanschgehäuses 30 an beiden Seitenflächen 11, 12 unter Beibehaltung des vollen Schwenkwinkels zu ermöglichen. Es könnte auch nur der Arm 21, der auf der Seite des Getriebegehäuses 5, an dem das Flanschgehäuse 30 montiert ist, mit einer solchen Einbuchtung 24 versehen sein. Wenn ein geringerer Schwenkbereich ausreichend ist, so könnten die Einbuchtungen 24 beider Arme 21 auch entfallen, was aber weniger bevorzugt ist.

Das Flanschgehäuse 30 könnte auch nur auf der dem benachbarten Arm 21 zugewandten Seite eine Einbuchtung 37 aufweisen. Es könnten hierbei für den Einsatz an den beiden Seitenflächen 11, 12 jeweils separate Flanschgehäuse 30 vorhanden sein, was ebenfalls weniger bevorzugt ist.

Die Antriebswelle 10 könnte nur an einer der Seitenflächen 11, 12 aus dem Getriebegehäuse 5 heraustreten, so dass nur auf dieser Seite der Antriebsmotor 27 mit dem Spindelhubgetriebe 1 verbindbar ist, was ebenfalls weniger bevorzugt ist. An den gegenüberliegenden Seitenflächen 11, 12 könnten auch Abschnitte von separaten Antriebswellen 10 aus dem Getriebegehäuse 5 heraustreten.

Das Spindelhubgetriebe 1 kann auch in der Weise ausgebildet sein, dass die Spindelmutter drehbar und achsial unverschiebbar im Getriebegehäuse 5 gelagert ist und durch Drehung der Antriebswelle 10 gedreht wird. Die Spindel 2, die gegen Drehung gesichert ist (durch ihre Verbindung mit der Last oder durch eine bekannte Drehsicherung) wird dann durch Drehung der Spindelmutter 6 in achsialer Richtung verstellt und verstellt hierbei die Last. Derartige Spindelhubgetriebe sind bekannt.

### Legende zu den Hinweisziffern:

- 1: Spindelhubgetriebe
- 2: Spindel
- 3: Achsiallager
- 4: Achsiallager
- 5: Getriebegehäuse
- 6: Spindelmutter
- 7: Last
- 8: Antriebsrad
- 9: Zahnrad
- 10: Antriebswelle
- 11: Seitenfläche
- 12: Seitenfläche
- 13: Lagerbuchse
- 14: Lagerbuchse
- 15: Gleitbuchse
- 16: Schwenkachse
- 17: Längsachse
- 18: Lagerbock
- 19: Lagerbock
- 20: Standfuß
- 21: Arm
- 22: Endabschnitt
- 23: Lagerzapfen
- 24: Einbuchtung
- 25: mittlerer Abschnitt
- 26: Fußabschnitt
- 27: Antriebsmotor
- 28: Motorwelle
- 29: Motorflanscheinheit
- 30: Flanschgehäuse
- 31: Kupplung
- 32: Gewindebohrung
- 33: Befestigungsschraube
- 34: Ringflansch
- 35: Ringflansch
- 36: Schraube
- 37: Einbuchtung
- 38: Einbuchtung
- 39: Mittelebene
- 40: Standebene
- 41: Schmiernippel
- 42: Tragteil
- 43: Achse
- 44: Achse
- 45: Winkel
- 46: Winkel
- 47: Bohrung

## Patentansprüche

1. Stelleinrichtung zum Positionieren einer Last, umfassend
ein Spindelhubgetriebe (1) mit einer Spindel (2), einer auf der Spindel (2) angeordneten Spindelmutter (6) und einem an gegenüberliegenden Seitenflächen (11, 12) erste und zweite Lagerbuchsen (13, 14) aufweisenden Getriebegehäuse (5), in welchem die Spindel (2) oder die Spindelmutter (6) und eine Antriebswelle (10) zum Antrieb der Spindel (2) bzw. der Spindelmutter (6) drehbar gelagert sind,
erste und zweite Lagerböcke (18, 19) jeweils mit einem Standfuß (20) und einem von diesem abstehenden Arm (21), der in einem an sein freies Ende anschließenden Endabschnitt (22) einen Lagerzapfen (23) aufweist, welcher zur schwenkbaren Lagerung des Getriebegehäuses (5) des Spindelhubgetriebes (1) in eine jeweilige Lagerbuchse (13, 14) des Getriebegehäuses (5) eingreift,
einen Antriebsmotor (27) mit einer Motorwelle (28) und
eine Motorflanscheinheit (29) mit einem Flanschgehäuse (30), welches einerseits mit dem Antriebsmotor (27), andererseits mit dem Getriebegehäuse (5) starr verbunden ist und eine im Flanschgehäuse (30) angeordnete Kupplung (31) zur Drehmomentübertragung von der Motorwelle (28) auf die Antriebswelle (10) des Spindelhubgetriebes (1) aufweist,
**dadurch gekennzeichnet, dass** das Flanschgehäuse (30) an einer derjenigen Seitenflächen (11, 12) des Getriebegehäuses (5) festgelegt ist, an der die Lagerbuchsen (13, 14) des Getriebegehäuses (5) angeordnet sind, wobei die Antriebswelle (10) des Spindelhubgetriebes (1) parallel zur Schwenkachse (16) liegt, um die das Spindelhubgetriebe (1) verschwenkbar ist, und dass das Flanschgehäuse (30) auf der der Schwenkachse (16) zugewandten Seite eine Einbuchtung (37) aufweist, in die ein Teil des Endabschnitts (22) des Arms (21) des dem Flanschgehäuse (30) benachbarten Lagerbocks (18) ragt.

2. Stelleinrichtung nach Anspruch 1, **dadurch gekennzeichnet, dass** zumindest der Arm (21) des dem Flanschgehäuse (30) benachbarten Lagerbocks (18) auf der dem Flanschgehäuse (30) zugewandten Seite in einem an seinen Endabschnitt (22) anschließenden mittleren Abschnitt (25) eine Einbuchtung (24) aufweist, in die in einem Teilbereich des Schwenkbereichs des Getriebegehäuses (5) ein Teil des Flanschgehäuses (30) ragt.

3. Stelleinrichtung nach Anspruch 2, **dadurch gekennzeichnet, dass** in der Schwenkstellung des Getriebegehäuses (5), in welcher die Spindel (2) rechtwinklig zu einer Standebene (40) der Standfüße (20) der Lagerböcke (18, 19) ausgerichtet ist, ein Teil des Flanschgehäuses (30) in die Einbuchtung (24) des Arms (21) ragt.

4. Stelleinrichtung nach einem der Ansprüche 1 bis 3, **dadurch gekennzeichnet, dass** an beiden Seitenflächen (11, 12) des Getriebegehäuses (5), an denen die Lagerbuchsen (13, 14) angeordnet sind, die Antriebswelle (10) oder Endabschnitte von zwei Antriebswellen (10) aus dem Getriebegehäuse (5) herausragen und dass wahlweise mit einer der beiden Seitenflächen (11, 12) des Getriebegehäuses (5) ein Flanschgehäuse (30) einer Motorflanscheinheit (29) starr verbindbar ist.

5. Stelleinrichtung nach Anspruch 4, **dadurch gekennzeichnet, dass** die Arme (21) beider Lagerböcke (18, 19) in einem mittleren Abschnitt (25) auf der zur Antriebswelle (10) gerichteten Seite, eine Einbuchtung (24) zur Aufnahme eines Teils des Flanschgehäuses (30) über einen Teilbereich des Schwenkbereichs des Getriebegehäuses (5) aufweisen.

6. Stelleinrichtung nach Anspruch 5, **dadurch gekennzeichnet, dass** die Einbuchtungen (24) der Arme (21) der beiden Lagerböcke (18, 19) in die gleiche Richtung weisen.

7. Stelleinrichtung nach einem der Ansprüche 1 bis 6, **dadurch gekennzeichnet, dass** das Flanschgehäuse (30) auch auf der von der Schwenkachse (16) abgewandten Seite eine Einbuchtung (38) aufweist.

8. Stelleinrichtung nach Anspruch 7, **dadurch gekennzeichnet, dass** das Flanschgehäuse (30) bezüglich einer Mittelebene (39), die senkrecht zur von der Antriebswelle (10) des Spindelhubgetriebes (1) und der Schwenkachse (16) des Spindelhubgetriebes (1) aufgespannten Ebene steht, spiegelsymmetrisch ausgebildet ist.

9. Stelleinrichtung nach einem der Ansprüche 1 bis 8, **dadurch gekennzeichnet, dass** die Lagerzapfen (23) einstückig mit den Armen (21) der Lagerböcke (18, 19) ausgebildet sind.

10. Stelleinrichtung nach einem der Ansprüche 3 bis 9, **dadurch gekennzeichnet, dass** ausgehend von der Schwenkstellung des Getriebegehäuses (5), in welcher die Spindel (2) senkrecht zur Standebene (40) der Standfüße (20) der Lagerböcke (18, 19) ausgerichtet ist, das Spindelhubgetriebe (1) um mindestens 90°, vorzugsweise mindestens 100°, in eine Richtung verschwenkbar ist, in der das Flanschgehäuse (30) aus der Einbuchtung (24) des Arms (21) herausgeführt wird.

11. Stelleinrichtung nach Anspruch 10, **dadurch gekennzeichnet, dass** das Spindelhubgetriebe (1) ausgehend von der Schwenkstellung, in welcher die Spindel (2) senkrecht zur Standebene (40) ausgerichtet ist, um mindestens 5°, vorzugsweise mindestens 10°, in die entgegengesetzte Richtung, in welcher das Flanschgehäuse (30) zunehmend in die Einbuchtung (24) des Armes (21) des Lagerbocks (18) hineinragt, verschwenkbar ist.

12. Stelleinrichtung nach einem der Ansprüche 1 bis 11, **dadurch gekennzeichnet, dass** das Getriebegehäuse (5) an mindestens einer seiner Seitenflächen (11, 12), an der die Antriebswelle (10) herausragt oder die Endabschnitte von zwei Antriebswellen (10) aus dem Getriebegehäuse (5) herausragen, Gewindebohrungen (32) aufweist, in die Befestigungsschrauben (33) zum Anschrauben des Flanschgehäuses (30) am Getriebegehäuse (5) einschraubbar sind.

13. Stelleinrichtung nach einem der Ansprüche 1 bis 12, **dadurch gekennzeichnet, dass** die Schwenkachse (16) des Spindelhubgetriebes (1) die Längsachse der Spindel (2) schneidet.

## Claims

1. An adjusting device for positioning a load, comprising
a lifting spindle transmission (1) with a spindle (2), a spindle nut (6) arranged on the spindle (2), and a transmission casing (5) which has first and second bearing bushes (13, 14) on opposing side surfaces (11, 12) and in which the spindle (2) or the spindle nut (6) and a drive shaft (10) for driving the spindle (2) or the spindle nut (6) are rotatably mounted,
first and second bearing brackets (18, 19) each having a supporting foot (20) and an arm (21) which projects therefrom and which, in an end portion (22) adjacent to its free end, has a bearing pin (23) that engages in a respective bearing bush (13, 14) of the transmission casing (5) for pivotably mounting the transmission casing (5) of the lifting spindle transmission (1),
a drive motor (27) with a motor shaft (28), and
a flanged motor unit (29) with a flanged casing (30) which is rigidly connected to the drive motor (27) on one side and to the transmission casing (5) on the other side and which has a coupling (31), arranged in the flanged casing (30), for the transmission of torque from the motor shaft (28) to the drive shaft (10) of the lifting spindle transmission (1),
**characterised in that** the flanged casing (30) is fixed to one of those side surfaces (11, 12) of the transmission casing (5) on which the bearing bushes (13, 14) of the transmission casing (5) are arranged, wherein the drive shaft (10) of the lifting spindle transmission (1) lies parallel to the pivoting axis (16) about which the lifting spindle transmission (1) is pivotable, and **in that** the flanged casing (30), on the side facing the pivoting axis (16), has a recess (37) into which part of the end portion (22) of the arm (21) of the bearing bracket (18) adjacent to the flanged casing (30) projects.

2. An adjusting device according to claim 1, **characterised in that at** least the arm (21) of the bearing bracket (18) adjacent to the flanged casing (30) has, on the side facing the flanged casing (30) in a middle portion (25) adjoining its end portion (22), a recess (24) into which part of the flanged casing (30) projects within a sub-range of the pivoting range of the transmission casing (5).

3. An adjusting device according to claim 2, **characterised in that,** in the pivoted position of the transmission casing (5) in which the spindle (2) is arranged at right angles to a supporting plane (40) of the supporting feet (20) of the bearing brackets (18, 19), part of the flanged casing (30) projects into the recess (24) in the arm (21).

4. An adjusting device according to any one of claims 1 to 3, **characterised in that,** on the two side surfaces (11, 12) of the transmission casing (5) on which the bearing bushes (13, 14) are arranged, the drive shaft (10) or end portions of two drive shafts (10) project from the transmission casing (5), and **in that** a flanged casing (30) of a flanged motor unit (29) is rigidly connectable to either one of the two side surfaces (11, 12) of the transmission casing (5).

5. An adjusting device according to claim 4, **characterised in that** the arms (21) of both bearing brackets (18, 19) have, in a middle portion (25) on the side facing the drive shaft (10), a recess (24) for receiving part of the flanged casing (30) over a sub-range of the pivoting range of the transmission casing (5).

6. An adjusting device according to claim 5, **characterised in that** the recesses (24) in the arms (21) of the two bearing brackets (18, 19) extend in the same direction.

7. An adjusting device according to any one of claims 1 to 6, **characterised in that** the flanged casing (30) also has a recess (38) on the side remote from the pivoting axis (16).

8. An adjusting device according to claim 7, **characterised in that** the flanged casing (30) is mirror-symmetrically formed in relation to a central plane (39) extending perpendicularly to the plane spanned by the drive shaft (10) of the lifting spindle transmission (1) and the pivoting axis (16) of the lifting spindle transmission (1).

9. An adjusting device according to any one of claims 1 to 8, **characterised in that** the bearing pins (23) are formed in one piece with the arms (21) of the bearing brackets (18, 19).

10. An adjusting device according to any one of claims 3 to 9, **characterised in that,** starting from the pivoted position of the transmission casing (5) in which the spindle (2) is arranged at right angles to the supporting plane (40) of the supporting feet (20) of the bearing brackets (18, 19), the lifting spindle transmission (1) is pivotable through at least 90°, preferably at least 100°, in a direction in which the flanged casing (30) is moved out of the recess (24) in the arm (21).

11. An adjusting device according to claim 10, **characterised in that,** starting from the pivoted position in which the spindle (2) is arranged at right angles to the supporting plane (40), the lifting spindle transmission (1) is pivotable through at least 5°, preferably at least 10°, in the opposite direction, in which the flanged casing (30) increasingly projects into the recess (24) in the arm (21) of the bearing bracket (18).

12. An adjusting device according to any one of claims 1 to 11, **characterised in that** the transmission casing (5) has, on at least one of its side surfaces (11, 12) on which the drive shaft (10) projects or on which the end portions of two drive shafts (10) project from the transmission casing (5), threaded bores (32) into which fastening screws (33) can be screwed in order to screw the flanged casing (30) to the transmission casing (5).

13. An adjusting device according to any one of claims 1 to 12, **characterised in that** the pivoting axis (16) of the lifting spindle transmission (1) intersects the longitudinal axis of the spindle (2).

## Revendications

1. Installation d'actionnement pour positionner une charge comprenant :
- une transmission à broche de levage (1), comportant une broche (2), recevant un écrou à broche (6) et un boîtier de transmission (5) ayant sur des faces latérales opposées (11, 12), un premier et un second coussinet de palier (13, 14), logeant à rotation la broche (2) ou l'écrou à broche (6) et un arbre d'entraînement (10) pour entraîner la broche (2) ou l'écrou à broche (6),
- un premier et un second support de palier (18, 19) ayant chacun une semelle d'appui (20) et un bras (21), partant de la semelle, le bras ayant dans son segment d'extrémité (22) près de son extrémité libre, un tourillon de palier (23) pénétrant dans l'un des coussinets respectifs (13, 14) du boîtier de transmission (5) pour monter en pivotement le boîtier (5) de la transmission à broche de levage (1),
- un moteur (27) avec un arbre moteur (28), et
- une unité à brides de moteur (29) comportant un carter à brides (30) relié rigidement d'un côté au moteur (27) et de l'autre au boîtier de transmission (5) et un accouplement (31) logé dans le carter à brides (30) pour transmettre le couple de l'arbre moteur (28) à l'arbre d'entraînement (10) de la transmission à broche de levage (1),
**caractérisée en ce que**
le carter à brides (30) est fixé à l'une des faces latérales (11, 12) du boîtier de transmission (5) munies des coussinets (13, 14) du boîtier de transmission (5),
l'arbre d'entraînement (10) de la transmission à broche de levage (1) est parallèle à l'axe de pivotement (16) autour duquel peut pivoter la transmission à broche de levage (1), et
le carter à brides (30) comporte sur le côté tourné vers l'axe de pivotement (16), une concavité (37) dans laquelle pénètre une partie du segment d'extrémité (22) du bras (21) du support de palier (18) voisin du carter à brides (30).

2. Installation d'actionnement selon la revendication 1,
**caractérisée en ce qu'**
au moins le bras (21) du support de palier (18) voisin du carter à brides (30) comporte sur le côté tourné vers le carter à brides (30), une concavité (24) dans le segment médian (25) adjacent à son segment d'extrémité (22), concavité dans laquelle pénètre une partie du carter de brides (30) dans la zone partielle de la plage de pivotement du boîtier de transmission (5).

3. Installation d'actionnement selon la revendication 2,
**caractérisée en ce que**
dans la position de pivotement du boîtier de transmission (5) dans laquelle la broche (2) est perpendiculaire au plan d'appui (40) des semelles d'appui (20) des supports de palier (18, 19), une partie du carter à brides (30) pénètre dans la concavité (24) du bras (21).

4. Installation d'actionnement selon l'une des revendications 1 à 3,
**caractérisée en ce que**
les deux faces latérales (11, 12) du boîtier de transmission (5) munies des coussinets (13, 14), l'arbre d'entraînement (10) ou les segments d'extrémité de deux arbres d'entraînement (10) saillent du boîtier de transmission (5), et
au choix l'une des deux faces latérales (11, 12) du boîtier de transmission (5) peut être reliée rigidement au carter à brides (30) de l'unité à brides de moteur (29).

5. Installation d'actionnement selon la revendication 4,
**caractérisée en ce que**
dans un segment médian (25), sur le côté tourné vers l'arbre d'entraînement (10), les bras (21) des deux supports de palier (18, 19) comportent une concavité (24) pour recevoir une partie du carter à brides (30) sur une zone partielle de la plage de pivotement du carter de transmission (5).

6. Installation d'actionnement selon la revendication 5,
**caractérisée en ce que**
les concavités (24) des bras (21) des deux supports de palier (18, 19) sont dirigées dans la même direction.

7. Installation d'actionnement l'une des revendications 1 à 6,
**caractérisée en ce que**
le carter à brides (30) comporte une concavité (38) sur le côté non tourné vers l'axe de pivotement (16).

8. Installation d'actionnement selon la revendication 7,
**caractérisée en ce que**
le carter à brides (30) est symétrique selon une symétrie plane par rapport à un plan médian (39) perpendiculaire au plan passant par l'arbre d'entraînement (10) de la transmission à broche de levage (1) et à l'axe de pivotement (16) de la transmission à broche de levage (1).

9. Installation d'actionnement selon l'une des revendications 1 à 8,
**caractérisée en ce que**
les tourillons de palier (23) sont réalisés en une seule pièce avec les bras (21) des supports de palier (18, 19).

10. Installation d'actionnement selon l'une des revendications 3 à 9,
**caractérisée en ce que**
partant de la position de pivotement du boîtier de transmission (5) dans laquelle la broche (2) est perpendiculaire au plan d'appui (40) des semelles d'appui (20) des supports de palier (18, 19), la transmission à broche de levage (1) peut être pivotée d'au moins 90°, de préférence d'au moins 100° dans une direction dans laquelle le carter à brides (30) se dégage de la concavité (24) du bras (21).

11. Installation d'actionnement selon la revendication 10,
**caractérisée en ce que**
partant de la position de pivotement dans laquelle la broche (2) est perpendiculaire au plan d'appui (40), la transmission à broche de levage (1) peut être pivotée d'au moins 5°, de préférence d'au moins 10° dans la direction opposée dans laquelle le carter à brides (30) pénètre de plus en plus dans la concavité (24) du bras (21) du support de palier (18).

12. Installation d'actionnement selon l'une des revendications 1 à 11,
**caractérisée en ce qu'**
au moins sur l'une de ses faces latérales (11, 12) dont dépasse l'arbre d'entraînement (10) ou les segments d'extrémité de deux arbres d'entraînement (10), le carter de transmission (5) comporte des taraudages (32) recevant des vis de fixation (33) pour visser le carter à brides (30) au boîtier de transmission (5).

13. Installation d'actionnement selon l'une des revendications 1 à 12,
**caractérisée en ce que**
l'axe de pivotement (16) de la transmission à broche de levage (1) coupe l'axe longitudinal de la broche (2).
